# FASCICULE DE BREVET EUROPEEN

(11) **EP 3 110 637 B1**
(45) Date de publication et mention de la délivrance du brevet: **18.04.2018**
(21) Numéro de dépôt: 15706868.5
(22) Date de dépôt: 28.01.2015
(51) Int. Cl.: B60D 1/48, B60D 1/46

(54) **VEHICULE AUTOMOBILE ATTELABLE PRESENTANT UN ATTELAGE AMELIORE**
KOPPELBARES KRAFTFAHRZEUG MIT VERBESSERTER KOPPLUNG
COUPLABLE MOTOR VEHICLE WITH IMPROVED COUPLING

(30) Priorité: 27.02.2014 FR 1451590
(43) Date de publication de la demande: 04.01.2017
(73) Titulaire: Commissariat à l'Energie Atomique et aux Energies Alternatives, 75015 Paris (FR)
(72) Inventeur: CERVANTES, Valéry, F-38000 Grenoble (FR)
(74) Mandataire: Colombo, Michel
(86) Numéro de dépôt international: PCT/FR2015/050192
(87) Numéro de publication internationale: WO 2015/128556

(56) Documents cités:
- EP-A1- 0 799 730
- FR-A- 875 768
- US-A- 2 302 246

## Description

L'invention concerne un véhicule automobile attelable présentant un attelage amélioré.

On connaît des véhicules automobiles attelables. Ces derniers comportent un attelage apte à coopérer avec un attelage correspondant situé sur un autre véhicule, de façon à pouvoir attacher ces véhicules entre eux et, en alternance, les détacher l'un de l'autre. Généralement, cet attelage est solidaire du châssis du véhicule. De fait, la hauteur par rapport au sol de cet attelage peut varier, par exemple lorsque les suspensions du véhicule sont enfoncées. Deux véhicules peuvent alors avoir leurs attelages positionnés à des hauteurs différentes, ce qui complique l'utilisation des attelages pour attacher ces véhicules entre eux.

De l'état de la technique est également connu des documents suivants FR875768A, EP0799730 et US2302246A.

Il existe donc un besoin pour un véhicule automobile attelable présentant un attelage dont l'utilisation est simplifiée pour attacher ce véhicule à un autre véhicule.

L'invention concerne donc un véhicule automobile apte à rouler sur une route plane et conforme à la revendication 1.

Du fait que le premier porte-roue est raccordé à la barre de torsion, celle-ci se déplace en rotation autour de l'axe transversal lorsque ce porte-roues se déplace entre ses positions éloignée et rapprochée. Comme la barre d'attelage est elle-aussi raccordée à la barre de torsion, elle se déplace avec cette barre, avec un mouvement de rotation autour de l'axe transversal. L'attelage accompagne ainsi le déplacement du porte-roues et donc du véhicule par rapport au sol. Ce déplacement permet de limiter la variation de la hauteur de l'attelage par rapport au sol.

Les modes de réalisation de l'invention peuvent présenter une ou plusieurs des caractéristiques des revendications 2 à 8.

Ces modes de réalisation présentent en outre les avantages suivants :
- le troisième point d'attache permet de tenir compte du déplacement des deux porte-roues plutôt que d'un seul ;
- l'utilisation d'une barre anti-roulis du train de roues comme barre de torsion simplifie la réalisation du véhicule.

L'invention sera mieux comprise à la lecture de la description qui va suivre, donnée uniquement à titre d'exemple non limitatif et faite en se référant aux dessins sur lesquels :
- la figure 1 est une illustration schématique d'un véhicule automobile attelable ;
- la figure 2 est une illustration schématique, en perspective, d'un train de roues du véhicule automobile de la figure 2 ;
- les figures 3A et 3B sont des illustrations schématiques, selon une vue en profil, du train de roues de la figure 2 dont des porte-roues sont dans des positions, respectivement, éloignée et rapprochée ;
- la figure 4 est une illustration schématique, selon une vue en profil, d'un train de roues apte à remplacer le train de roues de la figure 2 ;
- la figure 5 est une illustration schématique, en perspective, d'un autre mode de réalisation du train de roues de la figure 2.

Dans ces figures, les mêmes références sont utilisées pour désigner les mêmes éléments.

Dans la suite de cette description, les caractéristiques et fonctions bien connues de l'homme du métier ne sont pas décrites en détails.

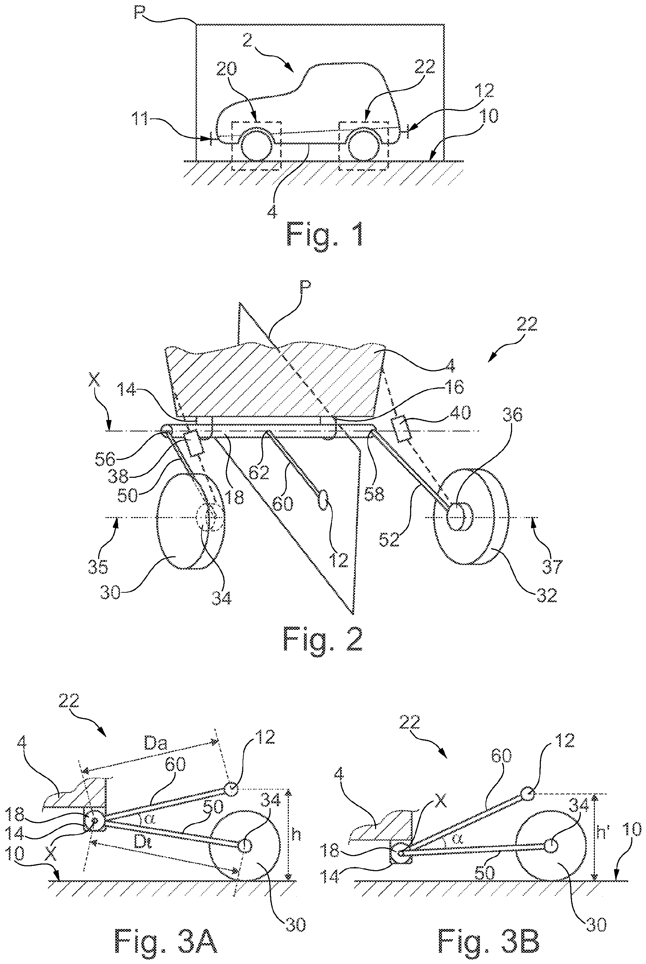

La figure 1 représente un véhicule automobile 2 attelable équipé d'un moteur (non illustré) permettant d'entraîner en rotation des roues motrices du véhicule 2. Par exemple, à l'exception des perfectionnements de l'attelage décrit ci-dessous, le véhicule 2 est identique à l'un des véhicules automobiles articulés décrits dans la demande de brevet FR1352128 déposée le 8 mars 2013. Aussi, par la suite, seuls les perfectionnements de l'attelage seront décrits en détails. Pour des détails supplémentaires sur le véhicule 2, on pourra se référer à la demande FR1352128 précédemment citée.

Le véhicule 2 comporte ici :
- un châssis 4 sur lequel sont fixées en rotation une pluralité de roues aptes à permettre un déplacement du véhicule 2 par roulement sur une route 10 lorsqu'elles sont mises en mouvement par le moteur du véhicule 2 ;
- des attelages avant 11 et arrière 12 ;
- une barre de torsion 18 (figure 2) ;

Le véhicule 2 s'étend ici selon un plan longitudinal P, perpendiculaire au plan de roulement du véhicule 2 et parallèle à la direction de déplacement du véhicule 2 lorsque celui-ci se déplace en ligne droite. Le plan de roulement est défini comme étant le plan passant par les points de contact entre la route 10 et les roues du véhicule 2. La route 10 est ici plane et horizontale. Le plan P est donc ici vertical et perpendiculaire à la route 10. Dans cet exemple, le châssis 4 comporte deux parties avant et arrière articulées l'une par rapport à l'autre. Le plan P est plus particulièrement défini lorsque les parties avant et arrière du véhicule sont alignées l'une par rapport à l'autre.

Les attelages 11 et 12 sont chacun aptes à coopérer avec un attelage correspondant placé sur autre véhicule pour, en alternance, attacher ensemble ou détacher l'un de l'autre le véhicule 2 de cet autre véhicule.

Les roues du véhicule 2 sont ici réparties entre des trains de roues avant 20 et arrière 22 du véhicule. Ces trains 20 et 22 sont ici similaires et comportent chacun deux roues. Pour simplifier, par la suite, seul le train 22 sera décrit en détail. L'homme du métier saura, à partir de la description du train 22, construire un train 20 avec un mécanisme permettant de maintenir l'attelage 11 à une hauteur constante par rapport à la route 10 quel que soit l'enfoncement des suspensions de ce train 20. Le train 20 pourra également comporter le dispositif de direction décrit dans la demande FR1352128 précédemment citée.

La figure 2 représente plus en détail le train 22. Ce train comporte :
- des paliers 14, 16 fixés sans degré de liberté au châssis 4 ;
- la barre 18 ;
- l'attelage 12 ;
- deux roues 30 et 32 du véhicule 2,
- deux porte-roues 34 et 36 ; et
- des suspensions 38 et 40.

Dans cet exemple, les constituants du train 22 sont symétriques par rapport au plan P. Ainsi, seuls les éléments situés du même côté du porte-roue 34 seront décrits en détail dans ce qui suit.

Sur le porte-roue 34 est fixé sans degré de liberté un axe de rotation de la roue 30, qui passe par le centre géométrique de ce porte-roue.

Dans cette description, le centre géométrique d'un élément est le barycentre de tous les points de cet élément, chacun de ces points étant affecté d'un même coefficient de pondération. Les points d'un élément sont ceux appartenant à son enveloppe extérieure.

Les axes de rotation des roues fixées sur les porte-roues 34 et 36 portent les références, respectivement, 35 et 37. Les axes 35 et 37 sont ici parallèles entre eux et s'étendent perpendiculairement au plan P. La roue 30 est fixée au porte-roue 34 de manière à être mobile en rotation autour de l'axe 35.

La suspension 38 est mécaniquement reliée d'une part au châssis 4 et d'autre part au porte-roue 34.

La suspension 38 raccorde mécaniquement le porte-roue 34 au châssis 4 pour qu'une partie du poids du véhicule 2 repose sur la roue 30. La suspension 38 permet un déplacement réversible du porte-roue 34 par rapport au châssis 4 selon au moins un degré de liberté. Ainsi, le porte-roue 34 est déplaçable par rapport au châssis 4 entre :
- une position éloignée, et
- une position rapprochée, dans laquelle l'axe 35 de rotation (et donc le centre du porte-roue 36) est plus proche du châssis 4 que dans la position éloignée.

Dans cet exemple, le porte-roue 34 est apte à se déplacer suivant une direction essentiellement verticale. Plus exactement, le centre géométrique du porte-roues 34 suit lors de ce déplacement une trajectoire essentiellement verticale. La réversibilité du déplacement du porte-roue 34 est ici assurée grâce à un amortisseur (non représenté sur les figures) inclus dans la suspension 38. Plus précisément, c'est la composante élastique de l'amortisseur (par opposé à sa composante d'amortissement) qui permet le déplacement réversible.

La suspension 38 est par exemple de type McPherson. Pour simplifier la figure 2, la suspension 38 n'est pas représentée en détail mais figure uniquement sous la forme de pointillés.

La barre 18 est montée en rotation à l'intérieur des paliers 14 et 16 autour d'un axe transversal X. L'axe X est ici perpendiculaire au plan P et parallèle aux axes 35 et 37 des roues 30 et 32. Cette barre 18 présente ici une forme rectiligne et s'étend le long de l'axe X.

La barre 18 est reliée mécaniquement et sans degré de liberté aux porte-roues 34 et 36 par des liaisons mécaniques respectives. Ainsi, un déplacement des porte-roues entre leurs positions rapprochée et éloignée entraîne en rotation la barre 18 autour de l'axe X.

A cet effet, la liaison mécanique du porte-roue 34 comporte un levier 50. Le levier 50 relie le porte-roues 34 à la barre de torsion 18 en un point d'attache 56 de la barre 18. Le point 56 comporte ici une liaison encastrement entre le levier 50 et la barre 18. Le levier 50 est ici rigide et présente une forme rectiligne. On note Dₗ la plus grande longueur de la projection orthogonale du levier 50 dans le plan P. Cette longueur Dₗ est mesurée dans le plan P entre les projections orthogonales dans ce plan P du point 56 et du centre géométrique du porte-roue 34. La longueur Dₗ est par exemple supérieure à 5cm ou à 10cm et inférieure à 2m ou à 1m ou à 50cm.

Les symétriques respectifs de la suspension 38, du levier 50 et du point d'attache 56 par rapport au plan P portent les références, respectivement, 40, 52 et 58 sur la figure 2.

Le point 56 est distant du plan P. Par exemple, le point 56 est placé à une extrémité de la barre 18.

Par exemple, lorsque le porte-roue 34 se déplace entre ses positions éloignée et rapprochée, le point 56 se déplace en rotation autour de l'axe X ce qui entraîne en rotation ou en torsion la barre 18 proportionnellement au déplacement du porte-roue 34.

L'attelage 12 est raccordé mécaniquement à la barre 18 au moyen d'une barre d'attelage 60 rigide. La barre 60 présente par exemple une rigidité telle qu'elle peut résister à une force supérieure à 100N ou à 1000N appliquée transversalement sans se déformer de façon irréversible. L'attelage 12 est apte à se déplacer de façon réversible, grâce au déplacement de la barre 60 autour de l'axe X, entre :
- une position basse, et
- une position haute, dans laquelle l'attelage 12 est plus haut par rapport au châssis 4 que dans la position haute.

Les positions haute et basse sont ici définies par rapport au châssis. La hauteur de l'attelage par rapport au châssis est par exemple définie, pour ces positions basse et haute, en référence à un même plan solidaire du châssis 4 et parallèle au plan de roulement. Ce plan est ici parallèle à la route 10. Cette hauteur est mesurée le long d'une direction perpendiculaire à ce plan entre ce plan et le centre géométrique de l'attelage 12.

La barre 60 est directement ancrée, sans aucun degré de liberté, par l'une de ses extrémités à la barre 18, en un point d'attache 62 situé dans le plan P. L'autre extrémité de la barre 60 est fixée, sans aucun degré de liberté, à l'attelage 12. La barre 60 présente ici une forme tubulaire et s'étend longitudinalement dans le plan P. L'attelage 12 est par exemple raccordé par encastrement avec la barre 60.

Ainsi, lorsque le point 62 se déplace en rotation autour de l'axe X, la barre 60 et l'attelage 12 se déplacent eux aussi en rotation autour de l'axe X. Plus précisément, l'attelage 12 se déplace :
- vers sa position haute au fur et à mesure que le point 62 tourne vers le haut, et
- vers sa position basse au fur et à mesure que le point 62 tourne vers le bas.

On note Dₐ la plus grande longueur de la barre 60. Cette longueur est mesurée dans le plan P entre les projections orthogonales dans ce plan P du point 62 et du centre géométrique de l'attelage 12. La longueur Dₐ est égale, à 10 % près ou à 5 % près ou de préférence à moins de 2 % près à la longueur Dₗ. La longueur Dₐ est par exemple supérieure à 5cm ou à 10cm et inférieure à 2m ou à 1m ou à 50cm.

On note α l'angle entre les projections orthogonales sur le plan P de la barre 60 et du levier 50. Cet angle α peut varier lorsque les porte-roues 34, 36 et la barre 60 se déplacent et engendrent un mouvement de torsion de la barre 18. En l'absence de torsion de la barre 18, l'angle α est par exemple compris entre -45° et +45° et, de préférence, entre -20° et +20°. De plus, ici, l'angle α est choisi pour que les projections orthogonales du levier 50 et de la barre 60 soient systématiquement toutes les deux du même côté du plan vertical contenant l'axe X. Plus précisément, dans le cas du train 22, ces projections orthogonales sont placées en arrière de ce plan vertical. L'arrière est ici défini par rapport à la direction de déplacement en marche avant du véhicule 2. Dans le cas du train 20, ces projections seront placées en avant du plan vertical correspondant.

Ici, le point 62 est placé sur la barre 18 en un emplacement où la raideur angulaire de la portion de la barre 18 située entre ce point 62 et le point 56 est égale, à 10 % près ou à 5 % près, à la raideur angulaire de la portion de la barre 18 située entre ce point 62 et le point 58. Ici, la barre 18 présente une raideur angulaire par unité de longueur constante sur toute sa longueur. Le point 62 est donc placé à équidistance des points 56 et 58. La raideur angulaire de la barre 18 est par exemple comprise entre 100 et 1000 N.m.deg⁻¹ ou entre 200 et 800 N.m.deg⁻¹. Par exemple, cette raideur angulaire est égale à 400 N.m.deg⁻¹.

La barre 18 est ici une barre anti-roulis du train 22. Par exemple, la barre 18 et les leviers 50 et 52 forment un seul bloc de matière formé d'un seul tenant et présentant une forme « en U ». Les leviers 50 et 52 forment ici les bras latéraux du « U ». Par exemple, la barre 18 et les leviers 50, 52 sont réalisés en matière métallique. Ainsi, la barre 18 limite le mouvement de roulis que peut présenter le véhicule 2 lors de son déplacement dans un virage.

Le déplacement du porte-roues 34 et de l'attelage 12 va maintenant être décrit plus en détail à l'aide des figures 3A et 3B.

Lorsque les porte-roues 34, 36 sont dans la position éloignée (Fig. 3A), l'attelage 12 est dans la position basse par rapport au châssis. Cette configuration correspond par exemple à une hauteur nominale du véhicule 2 par rapport à la route 10. L'attelage 12 se trouve à une hauteur h de la route 10. La hauteur h est ici mesurée le long d'une direction verticale, entre la face supérieure de la route 10 et le centre géométrique de l'attelage 12. La hauteur h est par exemple supérieure ou égale à 10cm ou à 20cm ou à 30cm ou à 50cm et inférieure ou égale à 1,8m ou à 1,5m ou à 1m.

Au cours de l'utilisation du véhicule 2, par exemple, les porte-roues 34, 36 se déplacent tous les deux vers leur position rapprochée (Fig. 3B). Cela peut être provoqué par une charge importante embarquée à bord du véhicule 2. Le véhicule 2, et plus précisément le châssis 4, se rapproche alors de la route 10. Comme les roues du véhicule 2 restent en contact avec la route, elles se déplacent relativement au châssis 4 en remontant vers le châssis 4. Les porte-roues 34 et 36 se déplacent donc simultanément vers leur position rapprochée. En se déplaçant vers leur position rapprochée, les porte-roues 34 et 36 entraînent en rotation autour de l'axe X les points 56 et 58 et donc, ici, la barre 18. La rotation des points 56 et 58 présente une amplitude proportionnelle au déplacement des porte-roues 34 et 36. La rotation des points 56 et 58 entraîne à son tour la rotation autour de l'axe X du point 62 et donc de l'attelage 12 vers sa position haute par rapport au châssis.

Dans la position rapprochée, les porte-roues 34 et 36 se trouvent plus proches du châssis 4 que dans la position éloignée. L'attelage 12 est quant à lui dans la position haute. Il présente alors une hauteur par rapport au châssis 4 qui est plus importante que dans sa position basse. La variation de position de l'attelage 12 par rapport au châssis 4 permet, notamment du fait du choix des valeurs de Dₗ et de Dₐ, de compenser le fait que le châssis 4 se rapproche de la route 10. Ainsi, dans la position haute, l'attelage 12 présente une hauteur h' par rapport au sol égale à 20% ou à 10 % près ou à 5 % près à la hauteur h. La hauteur h' est ici définie de la même façon que la hauteur h.

Ainsi, la hauteur de l'attelage 12 est essentiellement constante quelque soient les positions des porte-roues 34, 36. Il est ainsi plus facile d'attacher le véhicule 2 à un autre véhicule au moyen de l'attelage 12 par rapport au cas où la barre d'attelage est directement fixée sur le châssis 4. En effet, la hauteur de l'attelage 12 reste essentiellement constante. La hauteur est dite être essentiellement constante si elle reste égale à 20% près ou à 10 % près ou à 5 % près à une valeur de référence.

Cette configuration du train 22 permet en outre de faciliter un report de charge et un équilibrage d'assiette entre deux véhicules attachés ensemble au moyen de leurs attelages 11, 12. Par exemple, le véhicule 2 est attaché par l'attelage 12 à l'attelage 11 à l'avant d'un autre véhicule automobile qui lui est structurellement identique. Cet autre véhicule transporte toutefois une charge plus importante que le véhicule 2. Dans ce cas, cet autre véhicule présente un enfoncement plus important par rapport à la route 10 que le véhicule 2. Avant l'attelage de ces deux véhicules, les porte-roues du train avant de cet autre véhicule sont dans leur position rapprochée, alors que ceux du véhicule 2 sont dans leur position éloignée. Après l'attelage de ces deux véhicules, du fait de la configuration des trains de roues 22 du véhicule 2 et avant de cet autre véhicule, un couple mécanique est appliqué en rotation autour des axes X respectifs par les barres 60 respectives, sur les barres de torsion 18 respectives de ces trains. Il en résulte une force de réaction qui est appliquée sur les châssis respectifs de ces véhicules, ce qui équilibre leur hauteur l'un par rapport à l'autre.

L'équilibrage de charge et d'assiette entre les deux véhicules est ici exacerbé du fait que leurs attelages 11, 12 qui sont attelés entre eux sont :
- chacun raccordés sans degré de liberté en rotation en tangage à leur barre d'attelage respective, et
- raccordés sans degré de liberté en rotation en tangage entre eux.

Au cours du déplacement du véhicule 2, celui-ci peut subit un mouvement de roulis, par exemple du fait de déformations de la route 10 sur laquelle il circule. Les porte-roues 34 et 36 peuvent alors se déplacer différemment l'une par rapport à l'autre. Par exemple, lorsque le véhicule 2 roule sur une bosse, le porte-roue 34 est déplacé vers sa position rapprochée, mais le porte-roue 36 ne l'est pas. Pour simplifier, on considère que le châssis 4 ne subit pas de variation d'assiette est le point 58 reste immobile. La barre 18 subit alors un mouvement de torsion. Le point 62 est alors entraîné en rotation autour de l'axe X vers le haut, avec un déplacement équilibré entre ceux des points 56 et 58. Dans cet exemple, du fait du choix de la position du point 62 par rapport aux points 56 et 58, le point 62 subit une rotation autour de l'axe X avec une amplitude égale à la moyenne des amplitudes de rotation des points 56 et 58. Le point 58 restant ici immobile, cette amplitude est égale à la moitié de l'amplitude de rotation du point 56.

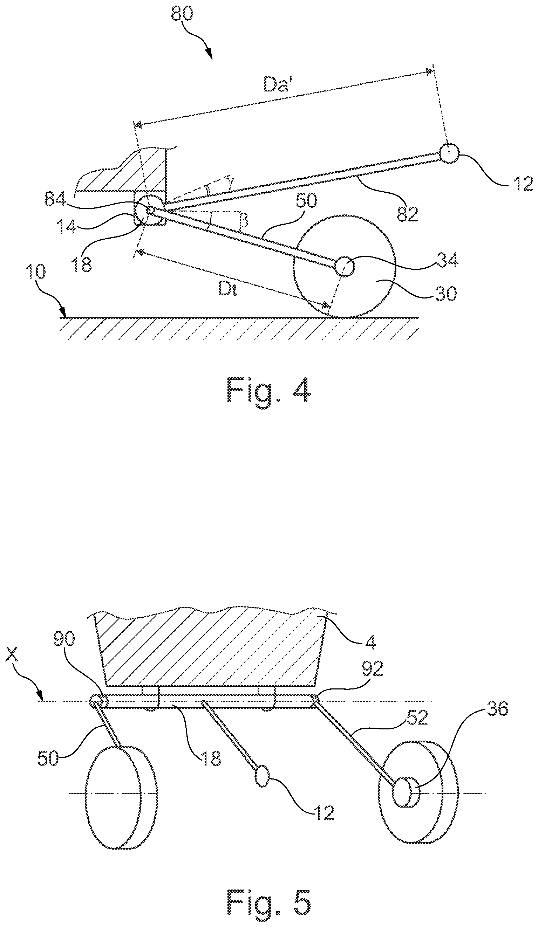

La figure 4 représente un train 80 apte à remplacer le train 22. Ce train 80 est identique au train 22, sauf que la barre 60 est remplacée par une barre 82 de longueur différente de la barre 60. Cette barre 82 présente une longueur D'ₐ supérieure à la longueur Dₗ d'un facteur numérique multiplicatif F. Par exemple, F est supérieur à 1,2 ou à 1,5 ou à 2. La longueur D'ₐ est ici définie de la même façon que la longueur Dₐ. La train 80 comporte alors un réducteur d'angle 84 (« réduction gear » en langue anglaise) pour limiter l'amplitude de la rotation de la barre 82 autour de l'axe X par un facteur F. Ainsi, cela maintient l'attelage 12 à une hauteur essentiellement constante, même si les longueurs D'ₐ et Dₗ sont différentes. Le réducteur 84 a pour fonction de transmettre un mouvement de rotation à la barre 82 autour de l'axe X en réponse à un mouvement de rotation du levier 50 autour de l'axe X tout en réduisant l'amplitude de ce mouvement du facteur F. Ce réducteur 84 est par exemple placé sur la liaison entre le levier 50 et la barre 18. Le réducteur 84 est ainsi configuré pour réduire le débattement angulaire du point 56 du facteur F, lorsque le porte-roue 34 se déplace entre ses positions rapprochée et éloignée. Plus exactement, le réducteur 84 est configuré pour que la relation suivante soit satisfaite : β = γ*D'ₐ/Dₗ où :
- β est la valeur absolue du débattement angulaire de la projection orthogonale dans le plan P du levier 50 lorsque le porte-roue 34 se déplace entre les positions rapprochée et éloignée ;
- γ est la valeur absolue du débattement angulaire de la projection orthogonale dans le plan P de la barre 82 lorsque le porte-roue 34 se déplace entre les positions rapprochée et éloignée.

Par exemple, le réducteur 84 comporte trois pignons engrenés en rotation et aptes à tourner dans un même sens autour d'un même axe de rotation. L'un des pignons est solidaire sans degré de liberté du levier 50. Un autre de ces pignons est solidaire sans degré de liberté de la barre 18.

En variante, comme cela est représenté sur la figure 5, la barre 18 n'est pas formée d'un seul tenant avec les leviers 50, 52. Par exemple, ces leviers 50, 52 sont des pièces distinctes. Les points d'attache 56 et 58 comportent par exemple un matériau élastomère 90, 92, pour raccorder mécaniquement les leviers 50 et 52 à la barre 18. Cela permet d'amortir des chocs mécaniques. Ce matériau élastomère est par exemple celui connu sous le nom « silentbloc » (« bushing » en langue anglaise).

De nombreux autres modes de réalisation sont possibles.

Le véhicule 2 peut être différent. Par exemple, le véhicule 2 peut ne pas être articulé et ne pas comporter à cet effet des parties avant et arrière aptes à se déplacer en rotation en lacet l'une par rapport à l'autre. Le véhicule 2 peut présenter un nombre de roues différents. Ces roues peuvent être réparties différemment dans les trains de roues. Il peut y avoir plus de deux trains de roues.

Le véhicule 2 peut ne présenter que l'un ou l'autre des attelages 11 et 12.

Le véhicule 2 peut ne pas avoir de moteur ou de dispositif de pilotage de ce véhicule par un conducteur embarqué dans ce véhicule. Par exemple, le véhicule 2 est une remorque.

L'attelage 12 peut être raccordé à la barre 60 différemment. Par exemple, il n'est pas encastré avec la barre 60 et peut présenter un degré de liberté par rapport à cette barre 60.

L'effet d'équilibrage de charge et d'assiette entre les véhicules attachés entre eux est exacerbé si les véhicules ne présentent aucun degré de liberté en rotation en tangage du fait de leurs attelages. A cet effet, les attelages 12 respectifs de ces véhicules attachés ne présentent par exemple aucun degré de liberté de rotation en tangage lorsqu'ils sont attelés entre eux. L'attelage 12 est dit présenter un degré de liberté en rotation en tangage s'il peut pivoter par rapport à la barre 60 ou par rapport à l'un ou l'autre des véhicules attachés selon un axe de rotation parallèle à l'axe X.

L'un ou l'autre des paliers 14 et 16 peut être omis.

La barre 18 peut être réalisée différemment. En particulier, la barre 18 n'est pas forcément rectiligne sur la totalité de sa longueur. La barre 18 peut par exemple présenter la forme d'un vilebrequin et à cet effet comporter un ou plusieurs coudes en forme de « U » sur sa longueur. La barre 18 peut aussi n'être rectiligne et alignée suivant l'axe X qu'au niveau des paliers 14 et 16.

En variante, la barre 18 n'est pas forcément une barre anti-roulis. C'est notamment le cas lorsque les suspensions 38, 40 comportent un dispositif dit de suspension active qui joue un rôle de compensation anti-roulis. La raideur angulaire de la barre 18 est alors choisie en conséquence.

La rigidité angulaire de la barre 18 peut être différente. Par exemple, la barre 18 est telle que :
- chaque levier 50 autorise un débattement vertical, c'est-à-dire dans une direction perpendiculaire à la route, du porte-roues 34 auquel il est mécaniquement raccordée, d'au plus 1 cm ou 2cm ou 5cm lorsque le point 58 auquel est raccordée l'autre levier 52 est immobilisé en rotation autour de l'axe X ;
- la barre 18 présente une raideur angulaire supérieure à 10kN.m.deg⁻¹ ou à 15kN.m.deg⁻¹ ou à 20kN.m.deg⁻¹.

Dans cette description, le terme de « barre » utilisé en référence à la barre 18 désigne une barre de torsion. L'homme du métier sait qu'une barre, aussi rigide soit-elle, peut néanmoins être déformée en torsion si un couple suffisamment élevé est exercé.

La barre 18 peut être positionnée différemment par rapport aux roues du train 22. Par exemple, la barre 18 du train 22 est positionnée plus vers l'arrière du véhicule 2 que ne le sont les roues 30, 32. La barre 60 s'étend alors en direction opposée des bras 50, 52. Plus exactement, la barre 18 se situe entre les axes 35, 37 et l'extrémité arrière du véhicule 2. Autrement dit, la projection orthogonale sur le plan P de la barre 60 est située par rapport au plan vertical contenant l'axe X, du côté opposé à celui où sont situées les projections orthogonales sur ce même plan P des leviers 50, 52. Dans cette configuration, le train 22 comporte alors en outre un dispositif de transmission pour que la barre 60 et les leviers 50, 52 se déplacent vers un même sens de déplacement vertical lorsqu'ils sont mis en mouvement. On définit par exemple le déplacement vertical d'un élément comme le déplacement de la projection orthogonale de cet élément sur un plan vertical.

En effet, si la barre 60 s'étend vers l'arrière du véhicule 2 alors que les leviers 50, 52 s'étendent à l'opposé, vers l'avant du véhicule 2, cela donne lieu à des sens de déplacement verticaux opposés lorsque la barre 18 tourne. Dans un tel cas, l'attelage 12 s'éloignerait du châssis et se rapprocherait de la route 10 lorsque les porte-roues 34, 36 se rapprochent du châssis. Cet attelage 12 ne se trouverait ainsi plus à une hauteur essentiellement constante par rapport à la route 10. Pour éviter cela, le dispositif de transmission est placé dans la liaison :
- entre la barre 18 et chaque levier 50, 52, ou
- entre les barres 18 et 60.

Ce dispositif de transmission comporte par exemple deux pignons engrenés aptes à tourner, dans des sens de rotation opposés, autour d'axes de rotation parallèles entre eux. Par exemple, l'un des pignons est solidaire sans degré de liberté de la barre 18 tandis que l'autre est solidaire sans degré de liberté de la barre 60. Ainsi, le déplacement des porte-roues 34, 36 depuis leur position éloignée vers leur position rapprochée entraîne un déplacement de l'attelage 12 depuis sa position basse vers sa position haute, et non pas dans le sens opposé.

La barre 18 peut présenter un léger désalignement par rapport à l'axe X du fait d'un jeu dans la liaison de la barre 18 au châssis et/ou aux leviers 50, 52. Par exemple, la barre 18 présente un écart par rapport à l'axe X inférieur à 20° ou à 10° ou à 5° et, de préférence, inférieur à 3° ou à 1°.

Les trains 20 et 22 peuvent être différents. En particulier, les trains 20 et 22 peuvent comporter des suspensions de géométries différentes. Le train 20 peut en outre comporter un dispositif de braquage pour braquer les roues de ce train 20.

Les suspensions 38, 40 peuvent être différentes. Par exemple, on peut utiliser des suspensions par triangles, par essieux, ou encore de type télescopique. Les amortisseurs de la suspension peuvent aussi être raccordés différemment aux porte-roues, soit directement, soit indirectement, par exemple au moyen de bras, d'un triangle ou de bielles.

Les leviers 50, 52 ne sont pas forcément des barres rigides et peuvent comporter un amortisseur télescopique.

La barre 60 peut être différente. La longueur peut être plus petite que la longueur d'un facteur multiplicatif F'. Dans ce cas, le réducteur 84 est remplacé par un multiplicateur présentant un facteur F' afin d'augmenter le débattement du levier 50 d'un facteur multiplicatif égal à F' pour que la condition sur l'angle β soit satisfaite et donc que la hauteur de l'attelage 12 soit maintenue.

Le réducteur 84 peut être placé différemment. Par exemple, il est disposé sur la liaison entre la barre 60 et la barre 18.

## Revendications

1. Véhicule automobile (2) apte à rouler sur une route (10) plane, comportant :
- un châssis (4) s'étendant dans un plan parallèle à la route,
- un premier porte-roue (34) sur lequel est fixé sans aucun degré de liberté un axe de rotation (35) d'une roue, cette axe passant par le centre du premier porte-roue,
- une première suspension (38) raccordant mécaniquement le premier porte-roue au châssis pour qu'une partie du poids du véhicule repose sur la roue (30) portée par ce premier porte-roue, cette suspension autorisant un déplacement réversible du premier porte-roue (34) entre une position éloignée et une position rapprochée dans laquelle le centre du premier porte-roue est plus proche du châssis que dans sa position éloignée,
- un palier (14, 16) fixé sans aucun degré de liberté sur le châssis (4),
- une barre (18) montée en rotation autour d'un axe transversal (X) à l'intérieur du palier (14, 16), cette barre comportant un premier point d'attache (56) mécaniquement raccordé au premier porte-roue de manière à ce que le premier porte-roue entraîne en rotation ce premier point d'attache autour de l'axe transversal (X) proportionnellement à l'amplitude de son déplacement entre ses positions rapprochée et éloignée,
- une barre d'attelage (60), solidaire du châssis, comportant à une extrémité libre un attelage (12) apte à coopérer avec un attelage correspondant sur un autre véhicule pour les attacher ensemble et, en alternance, les détacher l'un de l'autre, cette barre d'attelage étant déplaçable par rapport au châssis de façon réversible depuis une position basse vers une position haute en tournant vers le haut autour de l'axe transversal,
**caractérisé en ce que** la barre (18) comporte un deuxième point d'attache (62) mécaniquement raccordé à la barre d'attelage pour déplacer la barre d'attelage vers sa position haute au fur et à mesure que le premier porte-roue se déplace vers sa position rapprochée et pour déplacer la barre d'attelage vers sa position basse au fur et à mesure que le premier porte-roue se déplace vers sa position éloignée.

2. Véhicule selon la revendication 1, dans lequel la barre (18) est une barre de torsion.

3. Véhicule selon la revendication 2, dans lequel :
- le véhicule comporte un second porte-roue (36) sur lequel est fixé sans aucun degré de liberté un axe de rotation d'une roue (37), cet axe passant par le centre du second porte-roue,
- le véhicule comporte une seconde suspension (40) raccordant mécaniquement le second porte-roue au châssis pour qu'une partie du poids du véhicule repose sur la roue (32) portée par ce second porte-roue, cette seconde suspension autorisant un déplacement réversible du second porte-roue entre une position éloignée et une position rapprochée dans laquelle le centre du second porte-roue est plus proche du châssis que dans sa position éloignée,
- la barre de torsion (18) comporte un troisième point d'attache (58) mécaniquement raccordé au second porte-roue de manière à ce que le second porte-roue entraîne en rotation ce troisième point d'attache autour de l'axe transversal proportionnellement à l'amplitude de son déplacement entre ses positions rapprochée et éloignée, le deuxième point d'attache étant situé entre les premier et troisième point d'attache à un emplacement tel que la raideur angulaire de la portion de la barre de torsion (18) comprise entre les premier et deuxième points d'attache soit égale, à plus ou moins 20 % près, à la raideur angulaire de la portion de la barre de torsion comprise entre les deuxième et troisième point d'attache.

4. Véhicule selon la revendication 2 ou 3, dans lequel la distance la plus courte entre l'axe de rotation (35, 37) de chacun des portes-roues et l'axe transversal (X) est égale, à plus ou moins 10 % près, à la distance la plus courte entre le centre géométrique de l'attelage et cet axe transversal.

5. Véhicule selon l'une quelconque des revendications 3 et 4, dans lequel :
- le véhicule comporte :
• une première liaison mécanique (50) raccordant mécaniquement le premier point d'attache au premier porte-roue ;
• une deuxième liaison mécanique (52) raccordant mécaniquement le deuxième point d'attache au second porte-roue ;
chaque liaison mécanique (50) autorisant un débattement vertical, c'est-à-dire dans une direction perpendiculaire à la route, du porte-roues auquel elle est mécaniquement raccordée, d'au plus 1cm lorsque le point d'attache (58) auquel est raccordée l'autre liaison mécanique (52) est immobilisé en rotation autour de l'axe transversal ;
- la barre de torsion (18) présente une raideur angulaire supérieure à 10kN.m.deg⁻¹.

6. Véhicule selon la revendication 5, dans lequel la barre de torsion (18) et les première et deuxième liaisons mécaniques (50, 52) forment un seul bloc de matière.

7. Véhicule selon l'une quelconque des revendications précédentes, dans lequel l'extrémité de la barre d'attelage (60) qui est opposée à l'extrémité libre est directement raccordée mécaniquement au deuxième point d'attache (62).

8. Véhicule selon l'une quelconque des revendications précédentes, dans lequel l'attelage (12) est raccordé mécaniquement à la barre d'attelage (60) sans degré de liberté en rotation en tangage et est apte à être attelé sans degré de liberté en rotation en tangage à un attelage d'un autre véhicule.

## Patentansprüche

1. Kraftfahrzeug (2), das auf einer ebenen Straße (10) fahren kann, das aufweist:
- ein Fahrgestell (4), das sich in einer Ebene parallel zur Straße erstreckt,
- einen ersten Radträger (34), an dem eine Drehachse (35) eines Rads ohne jeden Freiheitsgrad befestigt ist, wobei diese Achse durch die Mitte des ersten Radträgers geht,
- eine erste Aufhängung (38), die den ersten Radträger mechanisch mit dem Fahrgestell verbindet, damit ein Teil des Gewichts des Fahrzeugs auf dem von diesem ersten Radträger getragenen Rad (30) ruht, wobei diese Aufhängung eine umkehrbare Verschiebung des ersten Radträgers (34) zwischen einer entfernten Stellung und einer angenäherten Stellung erlaubt, in der die Mitte des ersten Radträgers dem Fahrgestell näher ist als in seiner entfernten Stellung,
- ein Lager (14, 16), das ohne jeden Freiheitsgrad am Fahrgestell (4) befestigt ist,
- eine Stange (18), die um eine Querachse (X) im Inneren des Lagers (14, 16) drehbar montiert ist, wobei diese Stange einen ersten Befestigungspunkt (56) aufweist, der mechanisch mit dem ersten Radträger verbunden ist, damit der erste Radträger diesen ersten Befestigungspunkt um die Querachse (X) proportional zur Amplitude seiner Verschiebung zwischen seinen entfernten und angenäherten Stellungen in Drehung versetzt,
- eine fest mit dem Fahrgestell verbundene Kupplungsstange (60), die an einem freien Ende eine Kupplung (12) aufweist, die mit einer entsprechenden Kupplung an einem anderen Fahrzeug zusammenwirken kann, um sie miteinander zu verbinden und abwechselnd voneinander zu lösen, wobei diese erste Kupplungsstange bezüglich des Fahrgestells umkehrbar von einer tiefen Stellung in eine hohe Stellung verschoben werden kann, indem sie um die Querachse nach oben dreht,
**dadurch gekennzeichnet, dass** die Stange (18) einen zweiten Befestigungspunkt (62) aufweist, der mechanisch mit der Kupplungsstange verbunden ist, um die Kupplungsstange in dem Maße, in dem der erste Radträger sich in seine angenäherte Stellung verschiebt, in ihre hohe Stellung zu verschieben, und um die Kupplungsstange in dem Maße, in dem der erste Radträger sich in seine entfernte Stellung verschiebt, in ihre tiefe Stellung zu verschieben.

2. Fahrzeug nach Anspruch 1, wobei die Stange (18) eine Torsionsstange ist.

3. Fahrzeug nach Anspruch 2, wobei:
- das Fahrzeug einen zweiten Radträger (36) aufweist, an dem eine Drehachse eines Rads (37) ohne jeden Freiheitsgrad befestigt ist, wobei diese Achse durch die Mitte des zweiten Radträgers geht,
- das Fahrzeug eine zweite Aufhängung (40) aufweist, die den zweiten Radträger mechanisch mit dem Fahrgestell verbindet, damit ein Teil des Gewichts des Fahrzeugs auf dem von diesem zweiten Radträger getragenen Rad (32) ruht, wobei diese zweite Aufhängung eine umkehrbare Verschiebung des zweiten Radträgers zwischen einer entfernten Stellung und einer angenäherten Stellung erlaubt, in der die Mitte des zweiten Radträgers dem Fahrgestell näher ist als in seiner entfernten Stellung,
- die Torsionsstange (18) einen dritten Befestigungspunkt (58) aufweist, der mechanisch mit dem zweiten Radträger verbunden ist, damit der zweite Radträger diesen dritten Befestigungspunkt proportional zur Amplitude seiner Verschiebung zwischen seinen angenäherten und entfernten Stellungen um die Querachse in Drehung versetzt, wobei der zweite Befestigungspunkt sich zwischen dem ersten und dem dritten Befestigungspunkt an einer derartigen Stelle befindet, dass die Winkelsteifigkeit des Abschnitts der Torsionsstange (18), der zwischen dem ersten und dem zweiten Befestigungspunkt liegt, bis auf mehr oder weniger 20 % gleich der Winkelsteifigkeit des Abschnitts der Torsionsstange ist, der zwischen dem zweiten und dem dritten Befestigungspunkt liegt.

4. Fahrzeug nach Anspruch 2 oder 3, wobei der kürzeste Abstand zwischen der Drehachse (35, 37) jedes der Radträger und der Querachse (X) bis auf mehr oder weniger 10 % gleich dem kürzesten Abstand zwischen der geometrischen Mitte der Kupplung und dieser Querachse ist.

5. Fahrzeug nach einem der Ansprüche 3 und 4, wobei:
- das Fahrzeug aufweist:
• eine erste mechanische Verbindung (50), die den ersten Befestigungspunkt mechanisch mit dem ersten Radträger verbindet;
• eine zweite mechanische Verbindung (52), die den zweiten Befestigungspunkt mechanisch mit dem zweiten Radträger verbindet;
wobei jede mechanische Verbindung (50) einen senkrechten Ausschlag, d.h. in einer Richtung lotrecht zur Straße, des Radträgers, mit dem sie mechanisch verbunden ist, von höchstens 1 cm erlaubt, wenn der Befestigungspunkt (58), mit dem die mechanische Verbindung (52) verbunden ist, in Drehung um die Querachse blockiert ist;
- die Torsionsstange (18) eine Winkelsteifigkeit von mehr als 10kN.m.deg⁻¹ aufweist.

6. Fahrzeug nach Anspruch 5, wobei die Torsionsstange (18) und die erste und die zweite mechanische Verbindung (50, 52) einen einzigen Materialblock bilden.

7. Fahrzeug nach einem der vorhergehenden Ansprüche, wobei das Ende der Kupplungsstange (60), das dem freien Ende entgegengesetzt liegt, direkt mechanisch mit dem zweiten Befestigungspunkt (62) verbunden ist.

8. Fahrzeug nach einem der vorhergehenden Ansprüche, wobei die Kupplung (12) ohne Freiheitsgrad in Nickdrehung mechanisch mit der Kupplungsstange (60) verbunden und fähig ist, ohne Freiheitsgrad in Nickdrehung an eine Kupplung eines anderen Fahrzeugs gekuppelt zu werden.

## Claims

1. Motor vehicle (2) adapted to travel on a flat road (10), comprising:
- a chassis (4) extending in a plane parallel to the road,
- a first wheel carrier (34) to which is secured without any degree of freedom a rotational axis (35) of a wheel, this axis passing through the center of the first wheel carrier,
- a first suspension (38) mechanically connecting the first wheel carrier to the chassis so that part of the weight of the vehicle bears on the wheel (30) carried by this first wheel carrier, this suspension authorizing a reversible displacement of the first wheel carrier (34) between a remote position and a close position in which the center of the first wheel carrier is closer to the chassis than in its remote position,
- a bearing (14, 16), secured without any degree of freedom, to the chassis (4),
- a bar (18) rotatably mounted about a transverse axis (X) inside the bearing (14, 16), this bar comprising a first attachment point (56) mechanically connected to the first carrier wheel so that the first wheel carrier drives the first attachment point in rotation about the transverse axis (X) in proportion to the amplitude of its displacement between its close and remote positions,
- a coupling bar (60), attached to the chassis, comprising at a free end thereof a coupling (12) adapted to cooperate with a corresponding coupling of another vehicle to connect them together and, alternately, to detach them from one other, this coupling bar being movable relative to the chassis in a reversible manner from a low position to a high position by rotating upward about the transverse axis,
**characterized in that** the bar (18) comprises a second attachment point (62) mechanically connected to the coupling bar to move the coupling bar toward its high position as the first wheel carrier moves toward its close position and to move the coupling bar toward its low position as the first wheel carrier moves toward its remote position.

2. Vehicle according to Claim 1, wherein the bar (18) is a torsion bar.

3. Vehicle according to Claim 2, wherein:
- the vehicle comprises a second wheel carrier (36) to which a rotational axis (37) of a wheel is secured without any degree of freedom, this axis passing through the center of the second wheel carrier,
- the vehicle comprising a second suspension (40) mechanically connecting the second wheel carrier to the chassis so that part of the weight of the vehicle bears on the wheel (32) carried by this second wheel carrier, this second suspension authorizing a reversible displacement of the second wheel carrier between a remote position and a close position in which the center of the second wheel carrier is closer to the chassis than in its remote position,
- the torsion bar (18) comprises a third attachment point (58) mechanically connected to the second wheel carrier so that the second wheel carrier drives this third attachment point in rotation about the transverse axis in proportion to the magnitude of its displacement between its close and remote positions, the second attachment point being located between the first and third attachment points at a location such that the angular stiffness of the portion of the torsion bar (18) between the first and second attachment points is equal to, to within 20%, the angular stiffness of the portion of the torsion bar between the second and third attachment points.

4. Vehicle according to Claim 2 or 3, wherein the shortest distance between the axis of rotation (35, 37) of each of the wheel carriers and the transverse axis (X) is equal to, to within 10%, the shortest distance between the geometric center of the coupling and this transverse axis.

5. Vehicle according to either one of Claims 3 and 4, wherein:
- the vehicle comprises:
• a first mechanical linkage (50) mechanically connecting the first attachment point to the first carrier wheel;
• a second mechanical linkage (52) mechanically connecting the second attachment point to the second wheel carrier;
each mechanical linkage (50) allowing vertical movement, i.e. in a direction perpendicular to the road, of the wheel carrier to which it is mechanically connected, of at most 1 cm when the attachment point (58), to which the other mechanical linkage (52) is connected, is immobilized in rotation about the transverse axis;
- the torsion bar (18) has an angular stiffness in excess of 10 kN.m.deg⁻¹.

6. Vehicle according to Claim 5, wherein the torsion bar (18) and the first and second mechanical linkages (50, 52) form a single block of material.

7. Vehicle according to any of the preceding claims, wherein the end of the coupling bar (60) which is opposite the free end is directly connected mechanically to the second attachment point (62).

8. Vehicle according to any of the preceding claims, wherein the coupling (12) is mechanically connected to the coupling bar (60) without any degree of rotational freedom in pitch and is adapted to be coupled without any degree of rotational freedom in pitch to a coupling of another vehicle.
